# EUROPEAN PATENT SPECIFICATION

(11) **EP 3 996 994 B1**
(45) Date of publication and mention of the grant of the patent: **27.05.2026**
(21) Application number: 20740432.8
(22) Date of filing: 10.07.2020
(51) Int. Cl.: B64D 11/06, B60N 2/28, B64D 11/00, A47C 17/82, A47D 9/00

(54) **AIRCRAFT COT AND SEPARABLE SUITCASE COMPRISING AN AIRCRAFT COT**
FLUGZEUGKINDERBETT UND SEPARATER KOFFER MIT FLUGZEUGKINDERBETT
LIT DE BÉBÉ D'AVION ET VALISE SÉPARABLE COMPRENANT UN LIT DE BÉBÉ D'AVION

(30) Priority: 12.07.2019 NL 2023488
(43) Date of publication of application: 18.05.2022
(73) Proprietor: PUM Holding B.V., 1071 XB Amsterdam (NL)
(72) Inventor: HENDRIKS, Casper Frederik, 1071 XB Amsterdam (NL)
(74) Representative: V.O.
(86) International application number: PCT/NL2020/050456
(87) International publication number: WO 2021/010826

(56) References cited:
- WO-A1-2015/159061
- WO-A1-2015/187033
- ES-A1- 2 351 821
- US-A1- 2018 242 707
- US-B1- 7 188 899

## Description

The invention relates to an aircraft cot for use aboard an aircraft, in particular a passenger aircraft.

In general it is relatively difficult to acquire a suitable resting place for young children aboard an aircraft as air travel is geared towards adults. For long haul flights airliners typically provide a limited number of bassinets, or so-called skycots, but these are typically difficult to get hold of and/or require payment of surcharge fees. In addition, aircraft seats are not suitable for supporting young children, and in particular babies or infants in a recumbent and/or lying position. Often the seat may for instance be uncomfortable or unhygienic. Further, the baby or infant may not be secured properly.

A portable resting device suitable for use on public transport, such as busses and aircraft, is known from patent publication WO 2015/187033 A1. The portable resting device described therein comprises a suitcase, comprising a trunk box and a reversible lid. The lid is adjustable between a closed position and an upside down use position. In the upside down use position the lid is attached to the trunk box and the upward facing side of the lid provides a substantially flat bed base.

A child seat for use in public transport, especially aeroplane flights, is known from patent publication WO 2015/159061 A1. The child seat described therein comprises an inflatable base, inflatable front and rear supports and first and second inflatable side supports.

Although such a portable resting device may provide a resting place for small children aboard aircraft, a disadvantage is that the bed base is attached to a portable suitcase making it relatively unstable and/or relatively bulky during use. In addition, the suitcase is placed in front of an aircraft seat in a legroom space between consecutive rows of aircraft seats and thus cannot be stored in a designated storage compartment which is often required during flight. Furthermore, use of the portable resting device may be subject to the approval of the flight crew and be limited to stable flight phases, in particular cruise flight without turbulence. During critical flight phases such as taxiing, take-off, turbulence and landing, the resting device must be stored safely in the designated storage compartment. In practice this may be cumbersome and time consuming.

US7,188,899B1 discloses a foldable child restraint device which can be used with an existing aircraft passenger seat, the restraint device being secured to the passenger seat without using the conventional seat belt of the passenger seat, wherein back and bottom mounting straps of the restraint device secure the restraint device to the passenger seat.

An object of the invention therefore is to provide an aircraft cot that alleviates the disadvantages at least partially, while maintaining the above-mentioned advantages. In particular, the invention aims to provide a relatively stable and/or relatively compact aircraft cot that may substantially be used gate-to-gate.

Thereto, the invention provides for an aircraft cot comprising an elongate bed frame provided with an underside comprising a support surface for cooperating with a seat of an aircraft seat, with a projection surface projecting from the support surface beyond the seat, and with a top side that defines a bed base, wherein the bed frame comprises a belt receiving device that is configured to receive two ends of an aircraft belt that are buckled together with their buckle parts, and wherein the belt receiving device comprises a strapping provision that is upwardly oriented with respect to the underside and that is configured for cooperation with an inside of belt straps of the belt ends, wherein the belt receiving device is arranged between the underside and the top side.

By providing an elongate bed frame, a relatively solid construction may be achieved. When an underside of the bed frame comprises a support surface for cooperating with a seat of an aircraft seat, the seat may be used as a support for the bed frame relatively easily. In addition, the bed frame construction aboard the aircraft may be reinforced by cooperating with the seat.

By providing a projection surface that projects from the support face beyond the seat, the bed frame may provide support beyond the seat in a legroom space between consecutive aircraft seats.

When the top side of the bed frame defines a bed base, supporting young children, in particular babies and infants, in a recumbent and/or lying position may be facilitated. This way, the in flight comfort of young children may be improved.

By further providing a belt receiving device that is configured to receive two ends of an aircraft belt that are buckled together with their buckle parts, and wherein the belt receiving device comprises a strapping provision that is upwardly oriented with respect to the underside and that is configured for cooperation with an inside of belt straps of the belt ends, the bed frame may be strapped to the aircraft seat via the aircraft belt relatively securely. In addition, the upward orientation of the strapping provision facilitates obstructing movement of the bed frame transverse to and longitudinally along the seat. This way, the aircraft cot may be strapped and/or secured to the aircraft seat relatively safely, even during critical flight phases. Thereby, once strapped to the aircraft seat with the aircraft belt, the aircraft cot may be used substantially from gate-to-gate.

When at least a part of the bed frame that comprises the underside with the support surface is rigid, a relatively strong and/or safe construction may be provided.

When the belt receiving device is accessible via an entrance in the top side, the two ends of the aircraft belt may conveniently be buckled together with their buckle parts in the belt receiving space. In addition, the entrance may facilitate accessibility for tightening of the buckled together or so-called strapped aircraft belt. For example, the entrance may comprise a slot that is provided in the top side.

When the belt receiving device is arranged between the underside and the top side, in particular between the underside and a lid section that is provided in the top side, the belt ends with their buckle parts can be securely positioned, in particular such that a child in the bed frame is protected from the hard buckle parts and such that the child cannot easily access the buckle parts.

When the belt receiving device comprises one or more openings in and/or adjacent the underside for allowing one or more of the aircraft belt ends to enter the belt receiving device therethrough, a particularly safe belt receiving device can be provided. As the belt ends can thus enter the belt receiving device through the underside, the child's fingers are advantageously prevented from getting clamped by the belt ends, even when the belt ends are strapped tightly to the aircraft seat. As a further advantage, the cot can thus occupy substantially a full width of the aircraft seats without hampering strapping of the belt ends.

The belt receiving device can be configured to guide the received two ends of the aircraft belt along a belt path which extends between the underside and the top side, preferably substantially in a plane that is parallel to the underside, in particular such that the received two ends substantially conform to said plane. In this way the cot can be particularly compact while also enabling a particularly strong and stable strapping of the cot to the aircraft seat and while providing a relatively large amount of suitable surface area on the cot for positioning a child thereon.

When the top side of the bed frame is provided with or comprises a spanning element for covering the entrance of the belt receiving device, the bed base defined by the top side may be relatively comfortable. In other words, by covering the entrance with a spanning element, the bed base may be relatively even and/or smooth. The spanning element may form or comprise a lid, in particular a lid which is configured to cooperate with the entrance, for example a lid section of the top side. In particular, the spanning element may form or comprise a mattress or a section of a mattress to further improve comfort.

Preferably the spanning element is movable and/or releasable, such that the spanning element is adjustable between at least a covering position in which the spanning element covers at least the entrance to the belt receiving device and an open position in which the spanning element makes the entrance to the belt receiving device accessible. In the covering position, the spanning element protects the belt receiving device (at least part thereof) and the child from each other. In the open position, the spanning element enables the belt ends to be manipulated with respect to the belt receiving device, in particular for strapping and releasing the belt ends, for example by a parent of the child.

When the strapping provision comprises a strapping face that is arranged for cooperation with an inside of the belt straps of the belt ends, contact between the inside of the belt straps of the belt ends and the strapping provision may be improved. Thereby, loads may be distributed more evenly over the strapping face.

When the belt receiving device comprises at least one belt protrusion that is arranged for, during use, retaining the strapped aircraft belt that cooperates with the strapping provision within the belt receiving device, a relatively simple construction may improve holding the strapped aircraft belt in place within the belt receiving device. This way, displacement and/or sliding out of the strapped aircraft may be counteracted.

The strapping face and the at least one belt protrusion can together define a hook element of the strapping provision. When the strapping provision comprises at least two such hook elements which are spaced apart from each other to define a section of a belt path therebetween, the belt receiving device can provide good stability of the cot. Moreover a relatively large length of aircraft seatbelt can thus be received in the belt receiving device, which facilitates secure and easy strapping. When the at least two hook elements are spaced apart from an end of the cot which end is configured to cooperate with a back rest of the aircraft seat, these advantages are further enhanced.

When the top side, at least a section thereof, and the underside, at least a section thereof, mutually include an angle, seat angles of aircraft seats and/or cruise flight path angles may be compensated. Preferably the mutually included angle, for example at least in one state of the recliner mechanism, is an angle in the range of 0 to 20 degrees, more preferably in the range of 0 to 15 degrees, more preferably in the range of 4 to 10 degrees, more preferably in the range of 5 to 9 degrees, more preferably in the range of 6 to 8 degrees, most preferably about 7 degrees. This way, the bed base that is defined by the top side may provide a suitable resting angle that is arranged to e.g. counteract reflux and/or blood rushing to a baby's and/or infants head, in particular by preventing that the head is at a lower level than e.g. a heart and/or a stomach of the baby or infant. Elegantly, the bedframe may comprise a recliner mechanism for adjusting the mutually included angle. Advantageously, the bed frame and/or a mattress for the bed frame may be substantially wedge-shaped.

When the bed frame is provided with an auxiliary support that extends between the top side and the underside and that is arranged to cooperate with at least a backrest of the aircraft seat, stability of the construction may be improved even further.

The projection surface can be adjustable with respect to the support surface, in particular wherein the projection surface is pivotable about a rotation axis that extends transversely to a longitudinal direction of the elongate bed frame and/or is slidable with respect to the support surface along a longitudinal direction of the elongate bed frame. The bed frame can thus be adjusted to an available space in the aircraft and/or to a body size of the child. Moreover, the cot can thus advantageously be transported in a relatively compact configuration.

The projection surface can be releasably attached to the bed frame.

Preferably the projection surface, at least a part thereof, forms part of the bed frame, wherein in particular the bed frame is hingeable at an interface between the support surface and the projection surface. Such hinging can allow the cot to be brought to a relatively compact configuration for transport.

By providing a safety harness, in particular a three- or more point harness, that is fixed, at least selectively fixed, to the bed frame and that is arranged for securing a young child to the bed frame, child safety aboard an aircraft may be improved.

The bed frame at or near the underside can comprise a storage space, for example a storage space for storing a mattress and/or a safety harness and/or a safety belt for the bed frame.

The cot may comprise a securing member for securing the bed frame to a support structure of an aircraft seat.

When the cot comprises a leg which is extendable from the bed frame, in particular from the projection surface, said leg when extended being configured to support the bed frame, additional stability of the cot can be provided while the cot can also be compactly transported. When extended the leg can for example be positioned on a floor of the aircraft in front of the aircraft seat, such that the bed frame, e.g. the projection surface, is thereby additionally supported.

Elegantly, the bed frame may be or form at least part of a luggage, such as a suitcase, a trunk, a rucksack, a travelbag or backpack. In particular, the bed frame may conveniently be releasably mounted to the luggage and thereby form at least part of the luggage. The bed frame may be provided with at least one coupling that is arranged to couple with the luggage, in particular with at least part of an outer circumference of the luggage, with a(n) (extendable) handle of the luggage, with one or more straps of the luggage, or the like. Optionally, the bed frame may be provided with a handle for engagement by a user.

The invention will further be elucidated on the basis of exemplary embodiments which are represented in drawings. The exemplary embodiments are given by way of non-limitative illustration of the invention.

In the drawings:
Fig. 1 shows a schematic perspective view of an aircraft cot provided on an aircraft seat in accordance to a first aspect of the invention,
Fig. 2 shows a schematic side view of the aircraft cot of Fig. 1,
Fig. 3 shows a schematic partial cross sectional side view of a further embodiment of an aircraft cot according to the invention,
Fig. 4 shows a schematic partial cross sectional side view of part of an aircraft cot according to the invention,
Fig. 5 shows a schematic partial cross sectional side view of an aircraft cot according to a further aspect,
Fig. 6 shows a schematic side view of a separable luggage according to a second aspect of the invention,
Fig. 7A shows an isometric view of an aircraft cot according to a further embodiment,
Fig. 7B shows a side view of the aircraft cot of Fig. 7A
Fig. 8A shows an isometric view of the aircraft cot of Fig. 7A, wherein a belt receiving device is exposed,
Fig. 8B shows an isometric cross sectional view of a section of a strapping provision of Fig. 8A,
Figs. 9A and 9B show isometric views of the aircraft cot of Fig. 7A, wherein in Fig. 9B a second mounting provision for a safety harness is exposed,
Figs. 10A and 10B show isometric views of the aircraft cot of Fig. 7A, wherein a child is received in the cot, and
Figs. 11A-11D show isometric views of the aircraft cot of Fig. 7A, wherein in Figs. 11B-11D the cot is shown in a transport configuration.

It is noted that the figures are only schematic representations that are given by way of non-limited example. In the figures, the same or corresponding parts are designated with the same reference numerals.

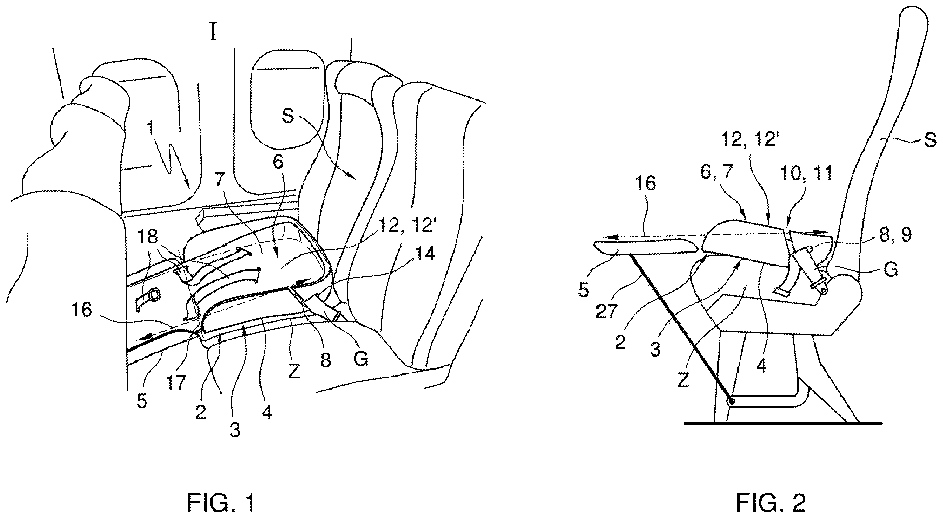

Fig. 1 and Fig. 2 show an aircraft cot 1 provided on a seat Z of an aircraft seat S. The aircraft cot 1 comprises an elongate bed frame 2. The bed frame 2 is provided with an underside 3 comprising a support surface 4 for cooperating with the seat Z of the aircraft seat S as shown. The bed frame 2 is provided with a projection surface 5 projecting from the support surface 4 beyond the seat Z. This way, the projection surface 5 may at least partially extend in a legroom space that is present between consecutive rows of aircraft seats S aboard an aircraft and may provide support beyond the seat Z. It will be appreciated that thus in some embodiments during use part of the projection surface 5 projects beyond the seat Z, while another part of the projection surface 5 cooperates with the seat Z, for example similar to how the support surface 4 cooperates with the seat S.

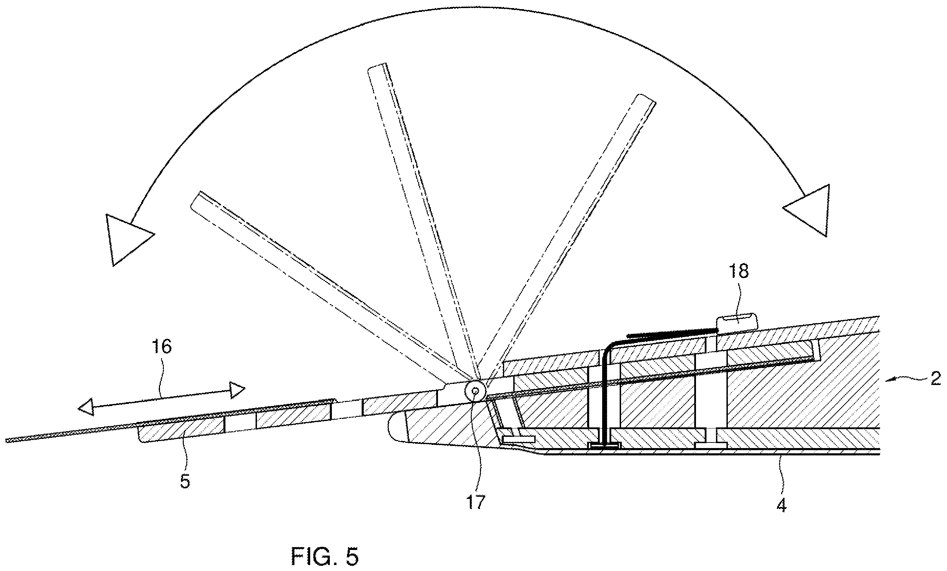

In the exemplary embodiment of Figs. 1 and 2, the projection surface 5 is adjustable with respect to the support surface 4. In particular, the projection surface 5 is pivotable about a rotation axis 17 that extends substantially transversely to a longitudinal direction 16 of the elongate bed frame 2. Additionally or alternatively, the projection surface 5 may be slidable with respect to the support surface 4 along the longitudinal direction 16 of the elongate bed frame 2 (see Fig. 5) or may be releasably or rigidly attached to the support surface 4.

In Figs. 1 and 2, the pivotable projection surface 5 is shown in an extended position and may be pivoted clockwise about the rotation axis 17 to a collapsed position (not shown) in which the bed frame 2 forms a suitcase as at least part of a luggage. The luggage may for instance also be or form another type of transportable equipment, such as a trunk, a rucksack, a travel bag or backpack. The luggage may comprise a handle, strap, or the like for engagement by a user.

The bed frame 2 is provided with a top side 6 that defines a bed base 7 for supporting a young child, in particular a baby or an infant, in a recumbent and/or lying position. Additionally or alternatively, the bed base 7 may e.g. support legs of a young child seated on the aircraft cot 1 in a substantially flat, planar orientation.

The bed frame 2 comprises a belt receiving device 8 that is configured to receive two ends of an aircraft belt G that are buckled together with their buckle parts. The belt receiving device 8 comprises a strapping provision 9 that is upwardly oriented with respect to the underside 3 and that is configured for cooperation with an inside of a belt strap B of the aircraft belt G ends, as will be discussed in more detail further on in this description. The belt receiving device 8 is accessible via an entrance 10 in the top side 6. In this exemplary embodiment, the entrance 10 comprises a slot 11 that is provided in the top side 6. The slot 11 is dimensioned to allow straps of the aircraft belt G to pass, in particular when the ends of the belt G are not buckled together.

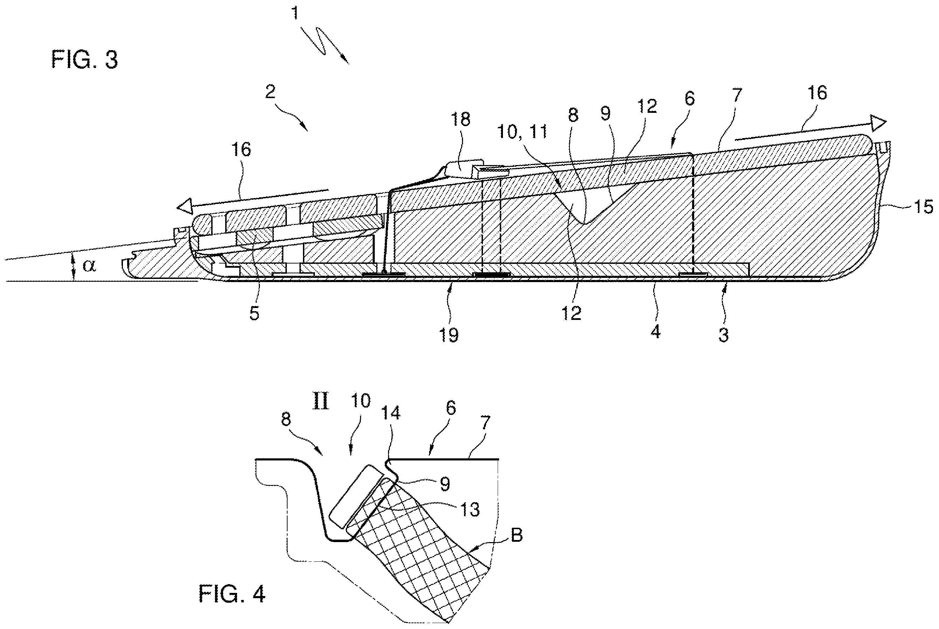

Fig. 1 and Fig. 2 illustrate the belt receiving device 8, strapping provision 9, entrance 10 and slot 11 only partly, as the top side 6 of the bed frame 2 is provided with a spanning element 12 that covers the entrance 10 to the belt receiving device 8. Here, the spanning element 12 forms a mattress 12'. The spanning element 12 is movable, such that the spanning element 12 is adjustable between a covering position I (see Fig. 1) in which the spanning element covers at least the entrance 10 to the belt receiving device 8 and an open position II (see Fig. 4) in which the spanning element 12 makes the entrance 10 to the belt receiving device 8 accessible. In the situation of Fig. 4, the spanning element 12 is positioned outside the boundary of the drawing, thus making the entrance 10 accessible.

The spanning element 12 and mattress 12' may e.g. be integrally formed or be separate parts. The spanning element 12 may cover the entrance 10 e.g. by spanning, extending over, and/or at least partially filling the entrance 10. Additionally or alternatively, the spanning element 12 may be releasable, for example loosely mounted on or releasably fastened to the bed frame 2 via releasable fasteners such as Velcro, zippers or magnets.

The belt receiving device 8 is provided with two lips 14 as belt protrusions 14 along either lateral side of the bed frame 2. The lips 14 are arranged for, during use, retaining the strapped aircraft belt G that cooperates with the strapping provision 9, in particular within the belt receiving device 8 as shown. In Figs. 1 and 2, the lips 14 are elegantly formed by the V-shaped slot 11. Additionally or alternatively, the at least one belt protrusion 14 may e.g. be or comprise a rib, flange, rim, ridge, protruding edge, hem, skirt, or the like to, during use, retain and/or hold the strapped aircraft belt G within the belt receiving device 8. In the exemplary embodiment of Fig. 4, the belt receiving device 8 is provided with a ridge 14 as belt protrusion. The ridge 14 is integrally formed with the top side 6 and extends substantially transversely to the longitudinal direction 16 of the elongate bed frame 2.

The bed frame 2 is substantially wedge-shaped to compensate for relatively small flight angles during cruise and/or for a reclined angle of the seat Z aboard an aircraft. This allows a baby or infant in the recumbent and/or lying position to lie substantially horizontally and/or slightly forward on the top side 6, which defines the bed base 7 and including the mattress 12', to e.g. counteract reflux and/or blood rushing to their head, at least during cruise flight. Additionally or alternatively, the mattress 12' may be substantially wedge-shaped. The bed frame 2 and/or the mattress 12' may e.g. also be shaped differently such as substantially rectangular, flat, planar, convex or concave for ergonomic purposes.

A part of the bed frame 2 that comprises the underside 3 with the support surface 4 is rigid to allow the aircraft cot 1 to comply with a 16G dynamic (forward) load standard of the Federal Aviation Administration (FAA) and/or European Aviation Safety Agency. That is to say the rigid part of the bed frame 2 has a relatively high stiffness. In particular, at least the rigid part of the bed frame 2 may comprise materials with a relatively high stiffness to density ratio, such as e.g. composites, metals, alloys and/or hybrid materials, more in particular fiber reinforced composites, aluminium and/or aluminium alloys. The bed frame 2 may also comprise reinforcements, such as e.g. ribs, flanges or stiffeners, to further strengthen the construction, in particular at least the part of the bed frame 2 that comprises the underside 3 with the support surface 4.

The aircraft cot 1 comprises a three point harness 18 as a safety harness. The three point harness is fixed to the bed frame 2 and is arranged for securing a young child, in particular a baby or an infant, to the bed frame 2. Four-, five-, six- or more point harnesses may also be used.

Referring to Fig. 2, the aircraft cot 1 according to a further aspect comprises a strap 27 as an example of a securing member for securing the bed frame 2 to a support of the aircraft seat S. In this case the strap 27 extends from the underside 3 and is secured to a luggage bracket provided underneath the aircraft seat S, preferably with some slack. In flight, the strap 27 may e.g. tighten during turbulence and/or air pockets to counteract the bed frame 2 from pivoting toward a backrest of the aircraft seat S.

Fig. 3 shows a further embodiment of an aircraft cot 1 according to the invention. In this exemplary embodiment, the strapping provision 9 comprises a strapping face 13 that is arranged for cooperation with the inside of the belt straps B of the belt ends. The strapping provision 9 is upwardly oriented with respect to the underside 3. The strapping face 13 is inclined at an angle of circa 45 degrees with respect to the underside 3. The strapping face 13 may be inclined at any angle between 5 and 85 degrees, such as between 10 and 80 degrees or between 20 and 70 degrees. In an elegant way, the strapping provision 9 may be arranged such that, during use, an inclination angle of the strapped aircraft belt G cooperating with the strapping face 13 is approximately 45 degrees along lateral sides of the bed frame 2. Mutatis mutandis, the upwardly oriented strapping provision 9 of Fig. 1 and Fig. 2 that is covered by the mattress 12' as spanning element 12, may be arranged such that, during use, the inside of belt straps B of belt ends cooperating with the strapping provision 9 are inclined at an angle of inclination along lateral sides of the bed frame 2, in particular an angle of inclination of circa 45 degrees.

The belt receiving device 8 is in Fig. 3 embodied as a substantially triangular prism-shaped recess in the top side 6 of the bed frame 2 that extends transversely to the longitudinal direction 16 of the elongate bed frame 2. The entrance 10 of the recess is covered by the correspondingly triangular prism-shaped spanning element 12 shown in the covering position I. Alternatively, the belt receiving device 8 may e.g. be substantially halfpipe- or quarterpipe-shaped, or the like, optionally with a correspondingly formed spanning element 12. The triangular prism-shaped recess is accessible through the entrance 10 by adjusting the spanning element 12 to an open position (not shown). Additionally or alternatively, the belt receiving device 8 may comprise one or more fasteners for belt straps of the aircraft belt G, such as for example one or more brackets, braces or clamps.

The belt receiving device 8 preferably comprises at least one rib 14 as belt protrusion 14, see Fig. 4. The at least one rib is arranged for, during use, retaining and/or holding the strapped aircraft belt G that cooperates with the strapping provision 9, in particular the strapping face 13 of the strapping provision 9, within the belt receiving device 8. The bed frame 2 is rigid to comply with the 16G dynamic load standard requirements.

The top side 6 of the bed frame 2 defines the bed base 7 and includes a mattress 12'. As shown in Fig. 3, the top side 6 and the underside 3 mutually include an angle α of circa 7 degrees. The mutually included angle α may e.g. vary between 0 degrees and 30 degrees, such as between 0 and 20 degrees or between 0 and 15 degrees. The bed frame 2 is substantially wedge-shaped. The bed frame 2 is provided with an auxiliary support 15 that extends between the top side 6 and the underside 3. The auxiliary support 15 is arranged to cooperate with at least the backrest of the aircraft seat S. This allows the aircraft cot 1 to be strapped to the aircraft seat S even more stably and/or securely.

Here, the aircraft cot 1 comprises a five point harness 18 as safety harness. Elegantly, anchoring points of the five point harness 18 on the top side 6 of the bed frame 2 are arranged such that the spanning element 12 may be made accessible when the upper two straps of the five point harness 18 are unfastened.

The bed frame 2 comprises a storage space 19 at the underside 3, e.g. for storing the mattress 12' for the bed frame 2 and/or baby paraphernalia.

Fig. 5 shows a projection surface 5 that is adjustable with respect to the support surface 4. The projection surface 5 is pivotable about the rotation axis 17 that extends transversely to the longitudinal direction 16 of the elongate bed frame 2 as illustrated. Further, the projection surface 5 is slidable with respect to the support surface 4 along the longitudinal direction 16 of the elongate bed frame 2. Additionally or alternatively, the projection surface 5 may be releasably attached to the bed frame 2. A maximum extended length of the elongate bed frame 2 may e.g. be circa 80 cm, circa 75 cm, circa 65 cm, or less. Additionally or alternatively, in a collapsed state the aircraft cot may comply with carry-on or cabin luggage requirements, such as e.g. having maximal dimensions of circa 55x40x20 cm, maximally circa 55x35x25 cm, or less.

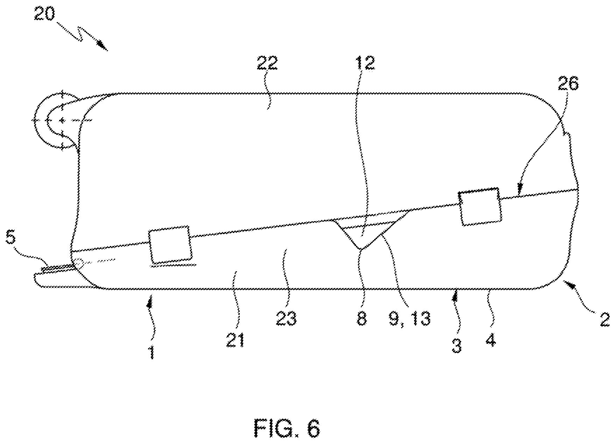

Fig. 6 shows a separable suitcase 20 according to a second aspect of the invention. The separable suitcase 20 comprises a first 21 and a second shell part 22. The first shell part 21 is releasably attached to the second shell part 22, in particular via at least one releasable connection such as a snap connection, a latch, a clasp and/or a releasable zipper. In particular, the first shell part 21 is releasable in its entirety from the second shell part 22. The releasable first shell part 21 of the separable suitcase 20 forms a bed frame 2 of an aircraft cot 1. In particular, an aircraft cot including features as discussed above.

Elegantly, the first 21 and/or second shell parts 22 may be of a hard shell type such as comprising acrylonitrile butadiene styrene (ABS), polycarbonate, polypropylene, aluminium, (carbon) fiber reinforced materials, and/or polyvinyl chloride (PVC). Additionally or alternatively, the first shell part 21 may be strengthened with reinforcing members such as stiffeners, ribs, stringers, spars, flanges, or the like.

The releasable first shell part 21 forms a lid 23 of the separable suitcase 20. The second shell part comprises a partition wall 24 that partitions a storage space 25 of the second shell part 22 from the first shell part 21. In particular, the separable suitcase 20 in assembled state may be dimensioned to be allowed as carry-on or cabin luggage, such as e.g. maximally circa 55x40x20 cm, maximally circa 55x35x25 cm, or the like.

In this exemplary embodiment, the first shell part 21 is wedge-shaped. The first 21 and second shell part 22 cooperate along a substantially diagonal partition plane 26. Alternatively, the first shell part 21 may e.g. be substantially rectangular-shaped, flat, planar, convex, concave, or the like.

One of the first 21 and second shell part 22 may be provided with a ridge along at least part of its circumference and the other of the first 21 and second shell part 22 may be provided with a corresponding recess along at least part of its circumference for receiving the ridge (not shown). This may facilitate handling of the separable suitcase, in particular separation and/or assembly of the first 21 and second shell parts 22.

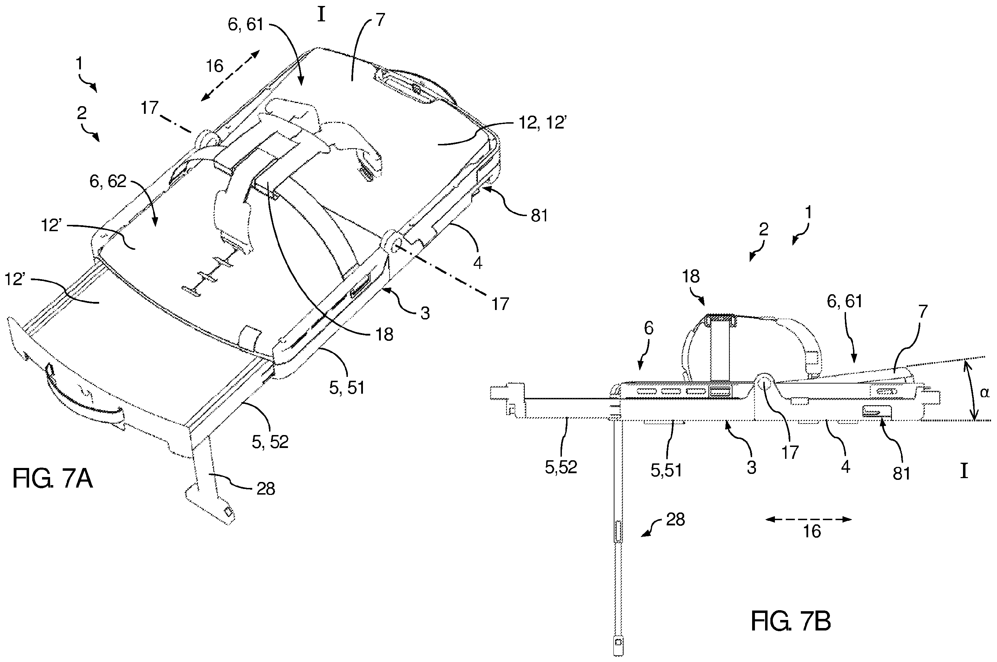

Figs. 7A-11D show an aircraft cot 1 according to a further embodiment, which further embodiment may be combined with one or more other embodiments.

With reference to Figs. 7A-11D, the aircraft cot 1 here comprises an elongate bed frame 2 provided with an underside 3 comprising a support surface 4 for cooperating with a seat of an aircraft seat, with a projection surface 5 projecting from the support surface 4 beyond the seat, and with a top side 6 that defines a bed base 7.

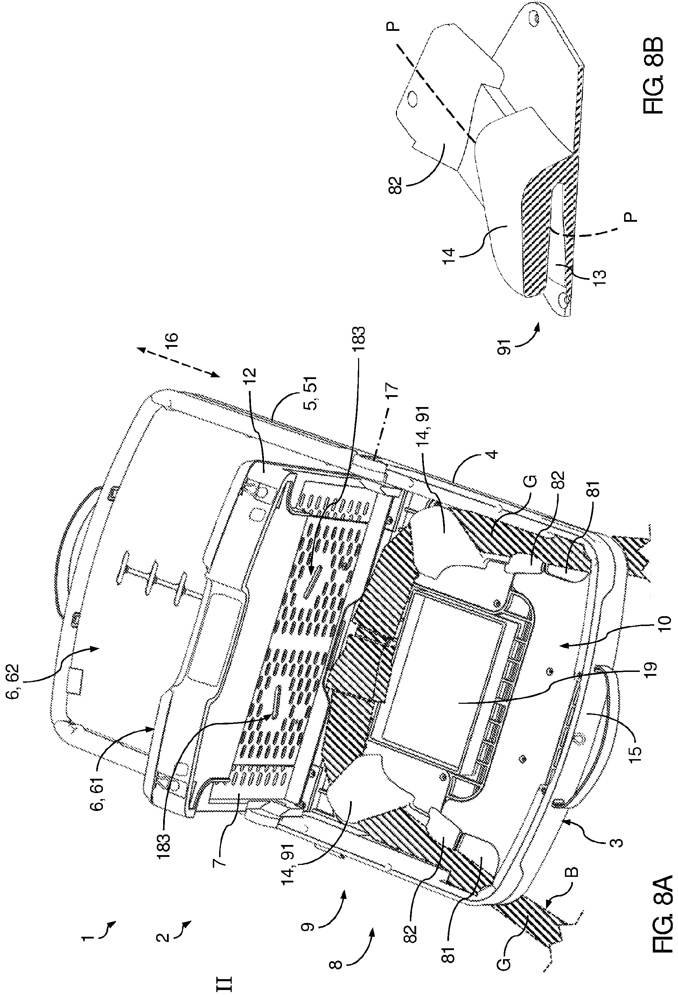

As shown in Fig. 8A, the bed frame 2 comprises a belt receiving device 8 that is configured to receive two ends of an aircraft belt G that are buckled together with their buckle parts, and wherein the belt receiving device 8 comprises a strapping provision 9 that is upwardly oriented with respect to the underside 3 and that is configured for cooperation with an inside B of belt straps of the belt ends wherein the belt receiving device 8 is arranged between the underside 3 and the top side 6.

Herein at least a part of the bed frame 2 that comprises the underside 3 with the support surface 4 is rigid. This allows the aircraft cot 1 to comply with a 16G dynamic (forward) load standard of the Federal Aviation Administration (FAA) and/or European Aviation Safety Agency (EASA). Preferably substantially the entire bed frame 2 is configured to be rigid during use while also being relatively light-weight. Such a configuration can be realized by appropriate selection and combination of materials and shapes. For example, a metal (e.g. steel and/or aluminum) grating or the-like can be used, e.g. in the bed base 7, to increase stiffness with relatively little weight increase, and to enable good ventilation of the bed base 7.

As shown in Fig. 8A, the belt receiving device 8 is accessible via an entrance 10 in the top side 6. Herein the belt receiving device 8 is arranged between the underside 3 and a first lid section 61 that is provided in the top side 6. The first lid section 61 here is hingeable about a hinging axis which extends parallel to, e.g. substantially coincides with, a rotation axis 17 which is further described elsewhere in this description.

Herein the belt receiving device 8 comprises two openings 81 in and/or adjacent the underside 3 for allowing one or more of the aircraft belt ends to enter the belt receiving device 8 therethrough. The openings 81 here are dimensioned in particular to accommodate moving the buckles of the belt ends of the belt G therethrough. Here a respective spacing element 82 is provided adjacent each opening 81 for guiding the belt G along a relatively smooth path P through the opening 81 and for enhancing a downward strapping force of the belt G.

Herein the belt receiving device 8 is configured to guide the received two ends of the aircraft belt G along a belt path which extends between the underside and the top side, here substantially in a plane that is parallel to the underside 3, in particular such that the received two ends substantially conform to said plane. The belt path can be seen in Fig. 8A as a substantially curved and/or angled path along which the belt G extends in the belt receiving device 8. In Fig. 8B, a section of the belt path has been indicated by a dashed line P.

Herein the top side 6 of the bed frame is provided with or comprises a spanning element 12, for example a lid section 61 of the top side 6, for covering the entrance 10 of the belt receiving device 8.

Herein the spanning element 12 is movable and/or releasable, such that the spanning element 12 is adjustable between at least a covering position I (see e.g. Figs. 7A-B) in which the spanning element 12 covers at least the entrance 10 to the belt receiving device 8 and an open position II (see Fig. 8A) in which the spanning element 12 makes the entrance 10 to the belt receiving device 8 accessible.

Herein the spanning element 12 forms or comprises a mattress 12' or a section thereof. Further mattress sections 12' can be provided, as shown in Fig. 7A, e.g. in the area of the projection surface 5. The mattress 12' or one or more mattress sections 12' can be detachable from and subsequently re-attachable to the bed frame 2, for example to enable cleaning, e.g. washing, of the mattress 12' and/or of the bed frame 2. Preferably the mattress 12' is reversible in the sense that the two opposite main outer faces of the mattress 12' are each suitable for receiving a child thereon and the mattress 12' fits in the bed frame 2 regardless of which of said faces is directed away from the bed frame 2.

Herein the strapping provision 9 comprises a strapping face 13 (see Fig. 8B), here two strapping faces 13 (one at each hook element 91), that is arranged for cooperation with an inside B of the belt straps of the belt ends.

Herein the belt receiving device 8 comprises two belt protrusions 14 arranged for, during use, retaining the strapped aircraft belt G that cooperates with the strapping provision 9 within the belt receiving device 8.

Herein each strapping face 13 and belt protrusion 14 together define a respective hook element 91 of the strapping provision 9, wherein the strapping provision 9 comprises two such hook elements 91 which are spaced apart from each other to define a section of a belt path therebetween, as can be seen in Fig. 8A.

Herein the two hook elements 91 are spaced apart from an end 15 of the cot 1 which end 15 is configured to cooperate with a back rest of the aircraft seat.

In the cot 1 shown here, the hook elements 91 are fixed with respect to the bed frame 2. Optionally in another embodiment such hook elements can be adjustable with respect to the bed frame to vary respective distances, e.g. a mutual distance between hook elements 91 and/or a distance between a hook element 91 and an opening 81 of the belt receiving device 8.

Herein the top side 6, at least a section thereof, and the underside 3, at least a section thereof, mutually include an angle α, indicated in the side view of Fig. 7B. A distance between the top side 6 and the underside 3 can thus be larger at one end, in particular a head end 15, of the bed frame 2, compared to another end, in particular a foot end, thereof. The bed frame 2 in particular comprises a recliner mechanism (not explicitly shown) for adjusting the mutually included angle α.

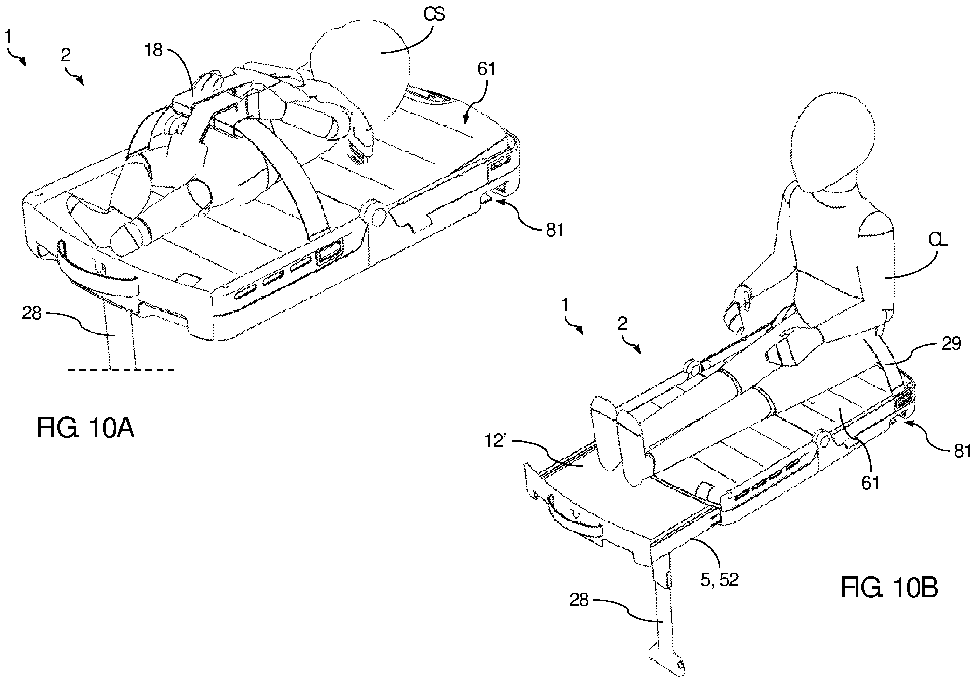

Herein the mutually included angle α, at least in one state of the recliner mechanism, is an angle in the range of 0 to 20 degrees, more preferably in the range of 0 to 15 degrees, more preferably in the range of 4 to 10 degrees, more preferably in the range of 5 to 9 degrees, more preferably in the range of 6 to 8 degrees, most preferably about 7 degrees (see Fig. 7B). Such an angle can correspond to a common pitch angle of an aircraft e.g. during cruising flight and/or taxiing, so that a young child CS received on the cot 1 (see Fig. 10A) is positioned substantially horizontally, thus in a safe and healthy position for a young child CS.

Fig. 10A shows the cot 1 with the recliner mechanism in a first state in which the included angle α is about 7 degrees, while Fig. 10B shows the cot 1 with the recliner mechanism in a second state in which the included angle α is about 0 (zero) degrees. As shown, in the first state (Fig. 10A), the cot 1 is particularly suitable for receiving a relatively small child CS thereon in a substantially supine posture, whereas in the second state (Fig. 10B), the cot 1 is particularly suitable for receiving a relatively large child CL thereon in a substantially seated posture.

Herein the bed frame 2 is provided with an auxiliary support 15, here an end 15 of the cot 1 (see e.g. Fig. 8A), that extends between the top side 6 and the underside 3 and that is arranged to cooperate with at least a backrest of the aircraft seat.

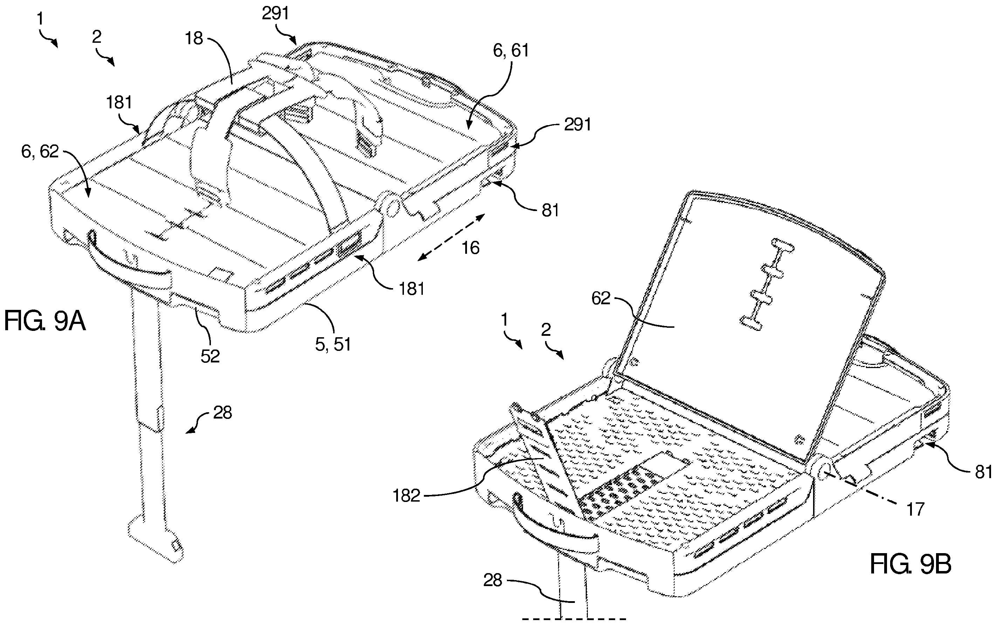

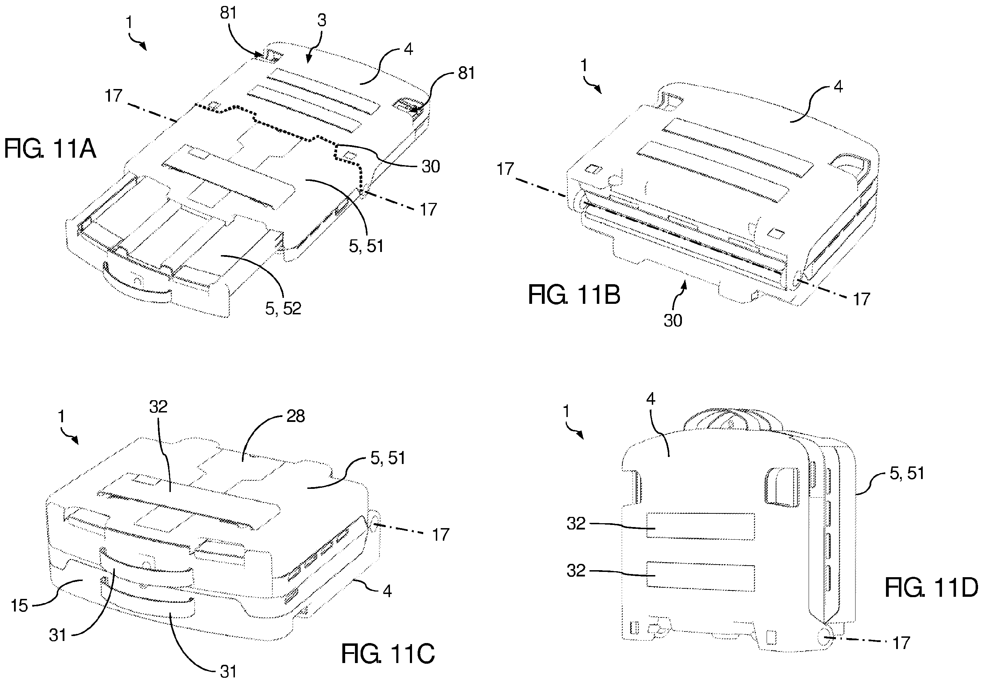

Herein the projection surface 5 is adjustable with respect to the support surface 4, wherein the projection surface 5 is pivotable about a rotation axis 17 that extends transversely to a longitudinal direction 16 of the elongate bed frame 2 and/or is slidable with respect to the support surface 4 along a longitudinal direction 16 of the elongate bed frame 2. As indicated in Fig. 7A, the project surface 5 here includes a rotationally extendible part 51 which is hingeable with respect to the support surface 4 about the rotation axis 17, and a slidably extendable part 52 (see also Fig. 10B) which is slidably extendible from the rotationally extendible part 51 along the longitudinal direction 16. Fig. 9A shows the slidably extendable part 52 retracted with respect to the rotationally extendible part 51. Figs. 11C shows the rotationally extendible part 51 rotationally retracted with respect to the support surface 4 into a compact configuration of the cot 1 which configuration is particularly suitable for transporting the cot 1. The slidably extendible part 52 is in particular stepwise slidably extendible to accommodate an available space in front of the aircraft seat, thus providing a particularly versatile yet compactly transportable cot 1.

Herein the projection surface 5, at least a part thereof, forms part of the bed frame 2, wherein in particular the bed frame 2 is hingeable at an interface 30 (see Figs. 11A-B) between the support surface 4 and the projection surface 5.

Herein the aircraft cot 1 comprises a safety harness 18, here a five-point harness, and/or an alternative safety harness 29, that is fixed, at least selectively fixed, to the bed frame 2 and that is arranged for securing a young child CS to the bed frame 2. An alternative safety harness 29, here a two point harness, has been indicated in Fig. 10B, the alternative harness 29 being arranged for securing a larger child CL to the bed frame 2 in a seated posture as shown.

For selectively fixing and/or adjusting the safety harness 18 and/or the alternative safety harness 29, the cot 1, in particular the bed frame 2, is here provided with mounting provisions 181, 182, 183, 291, see Figs. 9A, 9B and 8A. The mounting provisions 181, 182, 183, 291 here comprise an elongate opening through which an end of a safety harness can be inserted, said end being provided with an anchor element, e.g. a steel ring. Here mounting provisions 181, 182, 183 are configured for mounting the safety harness 18 thereto, while mounting provisions 291 are configured for mounting the alternative safety harness 29 thereto.

As can be seen in Figs. 9A-B, the first and second mounting provisions 181, 182 enable adjustment of the safety harness 18 by each providing an array of mounting positions along the longitudinal direction 16 of the bed frame 2. Thus, depending on the dimensions of the child, the safety harness 18 can be adjusted to fit the child relatively snugly but at the same time not too tightly. The shown configuration of mounting provisions enables that the child's head can be positioned relatively close to the back rest of the back rest of the aircraft seat substantially irrespective of the child's size. The second mounting provision 182 can be accessed via a second lid section 62 of the top side 6 as shown in Fig. 9B, wherein the second mounting provision 182 is hingeable away from the second lid section 62 to allow good access for the mounting while also providing secure mounting when the mounting provision 182 and the second lid section 62 are returned to their operational positions as shown in Fig. 9A.

Herein the aircraft cot 1 comprises a leg 28 which is extendable from the bed frame 2, in particular from the projection surface 5, said leg 28 when extended being configured to support the bed frame 2. The leg is preferably a telescopic leg 28 which is hingeably connected to the rotatably extendible part 51 of the projection surface 5 so that the leg 28 can be compactly retracted along the projection surface 5 as shown in Fig. 11C. During use, the leg 28 can rest on a floor part of the aircraft in front of the aircraft seat to provide additional support of the cot 1, in particular in the area of the projection surface 5. For good sideways stability, the leg 28 is here provided with a widened distal leg end or foot.

Herein the bed frame 2 can be releasably mounted to a luggage. The bed frame 2 is herein provided with two handles 31 for engagement by a user and elastic bands 32 e.g. for mounting to a luggage.

Movable and/or adjustable parts of the shown cot 1 are preferably lockable in and subsequently unlockable from respective one or more positions and/or states. The locking can be substantially automatic, e.g. spring actuated, upon reaching the respective position while the unlocking is manual, e.g. through operating one or more buttons or the-like, to provide a secure yet versatile cot.

Thus is described an aircraft cot comprising an elongate bed frame. The elongate bed frame is provided with an underside. The underside comprises a support surface for cooperating with a seat of an aircraft seat. The elongate bed frame is further provided with a projection surface projecting from the support surface beyond the seat. The elongate bed frame is furthermore provided with a top side that defines a bed base. The bed frame comprises a belt receiving device that is configured to receive two ends of an aircraft belt that are buckled together with their buckle parts. The belt receiving device comprises a strapping provision that is upwardly oriented with respect to the underside and that is configured for cooperation with an inside of belt straps of the belt ends. The bed frame may be or form at least part of a luggage, in particular releasably mounted to the luggage, more in particular a releasable first shell part of a separable suitcase.

Many variations will be apparent to the person skilled in the art. For instance, the aircraft cot may be provided with a locking mechanism to lock an adjustable projection surface in a certain position and/or orientation with respect to the support surface. For example, the mutually included angle between the top side and underside of the bed frame may be adjustable with a manual or driven recliner mechanism, e.g. between 0 and 30 degrees, such as between 0 and 15 degrees or between 0 and 10 degrees.

Such variations are understood to be comprised within the scope of the invention defined in the appended claims.

### LIST OF REFERENCE SIGNS

- 1.: Aircraft cot
- 2.: Bed frame
- 3.: Underside
- 4.: Support surface
- 5.: Projection surface
- 6.: Top side
- 7.: Bed base
- 8.: Belt receiving device
- 9.: Strapping provision
- 10.: Entrance
- 11.: Slot
- 12.: Spanning element
- 12'.: Mattress
- 13.: Strapping face
- 14.: Belt protrusion
- 15.: Auxiliary support, end of the cot
- 16.: Longitudinal direction bed frame
- 17.: Rotation axis
- 18.: Safety harness
- 19.: Storage space
- 20.: Separable suitcase
- 21.: First shell part
- 22.: Second shell part
- 23.: Lid of separable suitcase
- 24.: Partition wall
- 25.: Storage space second shell part
- 26.: Diagonal partition plane
- 27.: Securing member
- 28.: Leg
- 29.: Alternative safety harness
- 30.: Interface between support surface and projection surface
- 31.: Handle
- 32.: Elastic band
- 51.: Rotatably extendable part of projection surface
- 52.: Slidably extendable part of projection surface
- 61.: First lid section of top side
- 62.: Second lid section of top side
- 81.: Opening in and/or adjacent the underside
- 82.: Spacing element adjacent the opening
- 91.: Hook element
- 181.: First mounting provision for safety harness
- 182.: Second mounting provision for safety harness
- 183.: Third mounting provision for safety harness
- 291.: Mounting provision for alternative safety harness
- CS.: Smaller child
- CL.: Larger child
- P.: Belt path
- S.: Aircraft seat
- G.: Aircraft belt
- Z.: Seat
- B.: Inside of belt straps of aircraft belt ends
- α.: Mutually included angle between top side and underside
- I.: Covering position
- II.: Open position

## Claims

1. Aircraft cot (1) comprising an elongate bed frame (2) provided with an underside (3) comprising a support surface (4) for cooperating with a seat (Z) of an aircraft seat (S), with a projection surface (5) projecting from the support surface (4) beyond the seat (Z), and with a top side (6) that defines a bed base (7),
**characterized in that** the bed frame (2) comprises a belt receiving device (8) that is configured to receive two ends of an aircraft belt (G) that are buckled together with their buckle parts, and wherein the belt receiving device (8) comprises a strapping provision (9) that is upwardly oriented with respect to the underside (3) and that is configured for cooperation with an inside (B) of belt straps of the belt ends,
wherein the belt receiving device (8) is arranged between the underside (3) and the top side (6).

2. Aircraft cot according to claim 1, wherein at least a part of the bed frame (2) that comprises the underside (3) with the support surface (4) is rigid.

3. Aircraft cot according to claim 1 or 2, wherein the belt receiving device (8) is accessible via an entrance (10) in the top side (6).

4. Aircraft cot according to any of the preceding claims, wherein the belt receiving device (8) is arranged between the underside (3) and a lid section (61) that is provided in the top side (6),
wherein preferably the belt receiving device (8) comprises one or more openings (81) in and/or adjacent the underside (3) for allowing one or more of the aircraft belt ends to enter the belt receiving device (8) therethrough.

5. Aircraft cot according to claim 4, wherein the belt receiving device (8) is configured to guide the received two ends of the aircraft belt (G) along a belt path (P) which extends between the underside (3) and the top side (6), preferably substantially in a plane that is parallel to the underside (3), in particular such that the received two ends substantially conform to said plane.

6. Aircraft cot according to any one of claims 3 - 5, wherein the top side (6) of the bed frame (2) is provided with or comprises a spanning element (12), for example a lid section (61) of the top side, for covering the entrance (10) of the belt receiving device (8),
wherein preferably the spanning element (12) is movable and/or releasable, such that the spanning element (12) is adjustable between at least a covering position (I) in which the spanning element (12) covers at least the entrance (10) to the belt receiving device (8) and an open position (II) in which the spanning element (12) makes the entrance (10) to the belt receiving device (8) accessible,
wherein preferably the spanning element (12) forms or comprises a mattress (12') or a section thereof.

7. Aircraft cot according to any of the preceding claims, wherein the strapping provision (9) comprises a strapping face (13) that is arranged for cooperation with an inside (B) of the belt straps of the belt ends.

8. Aircraft cot according to any of the preceding claims, wherein the belt receiving device (8) comprises at least one belt protrusion (140 that is arranged for, during use, retaining the strapped aircraft belt (G) that cooperates with the strapping provision (9) within the belt receiving device (8).

9. Aircraft cot according to at least claims 7 and 8, wherein the strapping face (13) and the at least one belt protrusion (14) together define a hook element (91) of the strapping provision (9), wherein the strapping provision (9) comprises at least two such hook elements (91) which are spaced apart from each other to define a section of a belt path (P) therebetween,
wherein preferably the at least two hook elements (91) are spaced apart from an end (15) of the cot (1) which end (15) is configured to cooperate with a back rest of the aircraft seat (S).

10. Aircraft cot according to any of the preceding claims, wherein the top side (6), at least a section thereof, and the underside (3), at least a section thereof, mutually include an angle (α), the bed frame (2) in particular comprising a recliner mechanism for adjusting the mutually included angle (α),
wherein preferably the mutually included angle (α), for example at least in one state of the recliner mechanism, is an angle in the range of 0 to 20 degrees, more preferably in the range of 0 to 15 degrees, more preferably in the range of 4 to 10 degrees, more preferably in the range of 5 to 9 degrees, more preferably in the range of 6 to 8 degrees, most preferably about 7 degrees.

11. Aircraft cot according to any of the preceding claims, wherein the bed frame (2) is provided with an auxiliary support (15) that extends between the top side (6) and the underside (3) and that is arranged to cooperate with at least a backrest of the aircraft seat (S).

12. Aircraft cot according to any of the preceding claims, wherein the projection surface (5) is adjustable with respect to the support surface (4), in particular wherein the projection surface (5) is pivotable about a rotation axis (17) that extends transversely to a longitudinal direction (16) of the elongate bed frame (2) and/or is slidable with respect to the support surface (4) along a longitudinal direction (16) of the elongate bed frame (2).

13. Aircraft cot according to any of the preceding claims, wherein the projection surface (5), at least a part thereof, forms part of the bed frame (2), wherein in particular the bed frame (2) is hingeable at an interface between the support surface (4) and the projection surface (5).

14. Aircraft cot according to any of the preceding claims, comprising a safety harness, in particular a three- or more point harness, more in particular a five-point harness, that is fixed, at least selectively fixed, to the bed frame and that is arranged for securing a young child to the bed frame.

15. Aircraft cot according to any of the preceding claims, wherein the bed frame and/or a mattress for the bed frame is substantially wedge-shaped.

16. Aircraft cot according to any of the preceding claims, comprising a leg (28) which is extendable from the bed frame (2), in particular from the projection surface (5), said leg (28) when extended being configured to support the bed frame (2).

17. Aircraft cot according to any of the preceding claims, wherein the bed frame (2) is or forms at least part of a luggage, in particular wherein the bed frame is releasably mounted to the luggage and/or provided with a handle (31) for engagement by a user.

## Patentansprüche

1. Flugzeugbett (1), umfassend einen länglichen Bettrahmen (2), der an seiner Unterseite (3) mit einer Stützoberfläche (4) zum Zusammenwirken mit einem Sitz (Z) eines Flugzeugsitzes (S), wobei von der Stützoberfläche (4) über die Sitzfläche (Z) hinaus eine Auskragungsfläche (5) hinausragt, und mit einer Oberseite (6), die eine Bettbasis (7) definiert, versehen ist,
**dadurch gekennzeichnet, dass** der Bettrahmen (2) eine Gurtaufnahmevorrichtung (8) umfasst, die so ausgebildet ist, dass sie zwei Enden eines Flugzeuggurts (G) aufnimmt, die mit ihren Schnallenteilen miteinander verbunden sind, und wobei die Gurtaufnahmevorrichtung (8) eine Festschnallvorrichtung (9) umfasst, die gegenüber der Unterseite (3) nach oben gerichtet ist und für das Zusammenwirken mit einer Innenseite (B) der Gurtbänder der Gurtenden ausgelegt ist,
wobei die Gurtaufnahmevorrichtung (8) zwischen der Unterseite (3) und der Oberseite (6) angeordnet ist.

2. Flugzeugbett gemäß Anspruch 1, wobei zumindest ein Teil des Bettrahmens (2), der die Unterseite (3) mit der Stützoberfläche (4) umfasst, starr ist.

3. Flugzeugbett gemäß Anspruch 1 oder 2, wobei die Gurtaufnahmevorrichtung (8) über einen Eingang (10) in der Oberseite (6) zugänglich ist.

4. Flugzeugbett gemäß einem der vorstehenden Ansprüche, wobei die Gurtaufnahmevorrichtung (8) zwischen der Unterseite (3) und einem in der Oberseite (6) vorgesehenen Deckelabschnitt (61) angeordnet ist,
wobei die Gurtaufnahmevorrichtung (8) vorzugsweise eine oder mehrere Öffnungen (81) in und/oder neben der Unterseite (3) umfasst, damit eines oder mehrere der Gurtenden des Flugzeuggurts durch diese in die Gurtaufnahmevorrichtung (8) eingeführt werden können.

5. Flugzeugbett gemäß Anspruch 4, wobei die Gurtaufnahmevorrichtung (8) so ausgebildet ist, dass sie die aufgenommenen beiden Enden des Flugzeuggurts (G) entlang einer Gurtbahn (P) führt, die sich zwischen der Unterseite (3) und der Oberseite (6) erstreckt, vorzugsweise im Wesentlichen in einer Ebene, die parallel zur Unterseite (3) verläuft, insbesondere derart, dass die aufgenommenen beiden Enden im Wesentlichen dieser Ebene entsprechen.

6. Flugzeugbett gemäß einem der Ansprüche 3 bis 5, wobei die Oberseite (6) des Bettrahmens (2) mit einem Überbrückungselement (12) versehen ist oder dieses umfasst, beispielsweise einem Deckelabschnitt (61) der Oberseite zum Abdecken des Eingangs (10) der Gurtaufnahmevorrichtung (8),
wobei das Überbrückungselement (12) vorzugsweise derart beweglich und/oder lösbar ist, dass das Überbrückungselement (12) zwischen zumindest einer Abdeckposition (I), in der das Überbrückungselement (12) zumindest den Eingang (10) zur Gurtaufnahmevorrichtung (8) abdeckt, und einer offenen Position (II), in der das Überbrückungselement (12) den Eingang (10) zur Gurtaufnahmevorrichtung (8) zugänglich macht, verstellbar ist,
wobei das Überbrückungselement (12) vorzugsweise eine Matratze (12') oder einen Abschnitt davon bildet oder umfasst.

7. Flugzeugbett gemäß einem der vorstehenden Ansprüche, wobei die Festschnallvorrichtung (9) eine Festschnallfläche (13) umfasst, die so angeordnet ist, dass sie mit einer Innenseite (B) der Gurtbänder der Gurtenden zusammenwirkt.

8. Flugzeugbett gemäß einem der vorstehenden Ansprüche, wobei die Gurtaufnahmevorrichtung (8) zumindest einen Gurtvorsprung (140 umfasst, der so angeordnet ist, dass er im Gebrauch den festgeschnallten Flugzeuggurt (G) hält, der mit der Festschnallvorrichtung (9) innerhalb der Gurtaufnahmevorrichtung (8) zusammenwirkt.

9. Flugzeugbett gemäß zumindest den Ansprüchen 7 und 8, wobei die Festschnallfläche (13) und der zumindest eine Gurtvorsprung (14) gemeinsam ein Hakenelement (91) der Festschnallvorrichtung (9) definieren, wobei die Festschnallvorrichtung (9) zumindest zwei solche Hakenelemente (91) umfasst, die voneinander beabstandet sind, um dazwischen einen Abschnitt einer Gurtbahn (P) zu definieren,
wobei die zumindest zwei Hakenelemente (91) vorzugsweise von einem Ende (15) des Betts (1) beabstandet sind, wobei dieses Ende (15) so ausgebildet ist, dass es mit einer Rückenlehne des Flugzeugsitzes (S) zusammenwirkt.

10. Flugzeugbett gemäß einem der vorstehenden Ansprüche, wobei die Oberseite (6), zumindest ein Abschnitt davon, und die Unterseite (3), zumindest ein Abschnitt davon, einen Winkel (a) zueinander bilden, wobei der Bettrahmen (2) insbesondere einen Liegemechanismus zum Einstellen des zwischen ihnen gebildeten Winkels (a) umfasst,
wobei vorzugsweise der zwischen ihnen gebildete Winkel (a), beispielsweise zumindest in einem Zustand des Liegemechanismus, ein Winkel im Bereich von 0 bis 20 Grad, vorzugsweise im Bereich von 0 bis 15 Grad, weiter bevorzugt im Bereich von 4 bis 10 Grad, weiter bevorzugt im Bereich von 5 bis 9 Grad, weiter bevorzugt im Bereich von 6 bis 8 Grad, besonders bevorzugt etwa 7 Grad ist.

11. Flugzeugbett gemäß einem der vorstehenden Ansprüche, wobei der Bettrahmen (2) mit einer Zusatzstütze (15) versehen ist, die sich zwischen der Oberseite (6) und der Unterseite (3) erstreckt und so angeordnet ist, dass sie mit zumindest einer Rückenlehne des Flugzeugsitzes (S) zusammenwirkt.

12. Flugzeugbett gemäß einem der vorstehenden Ansprüche, wobei die Auskragungsfläche (5) gegenüber der Stützoberfläche (4) verstellbar ist, insbesondere wobei die Auskragungsfläche (5) um eine Drehachse (17) schwenkbar ist, die sich quer zu einer Längsrichtung (16) des länglichen Bettrahmens (2) erstreckt, und/oder in Bezug auf die Stützfläche (4) entlang einer Längsrichtung (16) des länglichen Bettrahmens (2) verschiebbar ist.

13. Flugzeugbett gemäß einem der vorstehenden Ansprüche, wobei die Auskragungsfläche (5) zumindest teilweise Teil des Bettrahmens (2) bildet, wobei insbesondere der Bettrahmen (2) an einer Schnittstelle zwischen der Stützoberfläche (4) und der Auskragungsfläche (5) schwenkbar ist.

14. Flugzeugbett gemäß einem der vorstehenden Ansprüche, umfassend einen Sicherheitsgurt, insbesondere einen Drei- oder Mehrpunktgurt, genauer gesagt einen Fünfpunktgurt, der am Bettrahmen befestigt, zumindest wahlweise befestigt ist, und dazu dient, ein Kleinkind am Bettrahmen zu sichern.

15. Flugzeugbett gemäß einem der vorstehenden Ansprüche, wobei der Bettrahmen und/oder eine Matratze für den Bettrahmen im Wesentlichen keilförmig ist.

16. Flugzeugbett gemäß einem der vorstehenden Ansprüche, umfassend ein Bein (28), das aus dem Bettrahmen (2), insbesondere aus der Auskragungsfläche (5), ausfahrbar ist, wobei das Bein (28) im ausgefahrenen Zustand so ausgebildet ist, dass es den Bettrahmen (2) stützt.

17. Flugzeugbett gemäß einem der vorstehenden Ansprüche, wobei der Bettrahmen (2) ein Gepäckstück ist oder zumindest einen Teil davon bildet, insbesondere wobei der Bettrahmen lösbar an dem Gepäckstück befestigt und/oder mit einem Griff (31) zum Greifen durch einen Benutzer versehen ist.

## Revendications

1. Lit de bébé d'avion (1) comprenant un cadre de lit allongé (2) prévu avec une face inférieure (3) comprenant une surface de support (4) pour coopérer avec un siège (Z) d'un siège d'avion (S), avec une surface de saillie (5) faisant saillie à partir de la surface de support (4) au-delà du siège (Z), et avec un côté supérieur (6) qui définit une base de lit (7),
**caractérisé en ce que** le cadre de lit (2) comprend un dispositif de réception de ceinture (8) qui est configuré pour recevoir deux extrémités d'une ceinture d'avion (G) qui sont bouclées ensemble avec leurs parties de boucle, et dans lequel le dispositif de réception de ceinture (8) comprend un élément de sanglage (9) qui est orienté vers le haut par rapport à la face inférieure (3) et qui est configuré pour coopérer avec un intérieur (B) des sangles de ceinture des extrémités de ceinture,
dans lequel le dispositif de réception de ceinture (8) est agencé entre la face inférieure (3) et le côté supérieur (6).

2. Lit de bébé d'avion selon la revendication 1, dans lequel au moins une partie du cadre de lit (2) qui comprend la face inférieure (3) avec la surface de support (4) est rigide.

3. Lit de bébé d'avion selon la revendication 1 ou 2, dans lequel le dispositif de réception de ceinture (8) est accessible via une entrée (10) dans le côté supérieur (6).

4. Lit de bébé d'avion selon l'une quelconque des revendications précédentes, dans lequel le dispositif de réception de ceinture (8) est agencé entre la face inférieure (3) et la section de couvercle (61) qui est prévue dans le côté supérieur (6),
dans lequel de préférence, le dispositif de réception de ceinture (8) comprend une ou plusieurs ouvertures (81) dans et/ou de manière adjacente à la face inférieure (3) pour permettre à une ou plusieurs des extrémités de ceinture d'avion d'entrer dans le dispositif de réception de ceinture (8).

5. Lit de bébé d'avion selon la revendication 4, dans lequel le dispositif de réception de ceinture (8) est configuré pour guider les deux extrémités reçues de la ceinture d'avion (G) le long d'un chemin de ceinture (P) qui s'étend entre la face inférieure (3) et le côté supérieur (6), de préférence sensiblement dans un plan qui est parallèle à la face inférieure (3), en particulier de sorte que les deux extrémités reçues se conforment sensiblement audit plan.

6. Lit de bébé d'avion selon l'une quelconque des revendications 3 à 5, dans lequel le côté supérieur (6) du cadre de lit (2) est prévu avec ou comprend un élément de liaison (12), par exemple une section de couvercle (61) du côté supérieur, pour recouvrir l'entrée (10) du dispositif de réception de ceinture (8),
dans lequel, de préférence, l'élément de liaison (12) est mobile et/ou libérable, de sorte que l'élément de liaison (12) est réglable entre au moins une position de recouvrement (I) dans laquelle l'élément de liaison (12) recouvre au moins l'entrée (10) jusqu'au dispositif de réception de ceinture (8) et une position ouverte (II) dans laquelle l'élément de liaison (12) rend l'entrée (10) dans le dispositif de réception de ceinture (8) accessible,
dans lequel, de préférence, l'élément de liaison (12) forme ou comprend un matelas (12') ou une section de ce dernier.

7. Lit de bébé d'avion selon l'une quelconque des revendications précédentes, dans lequel l'élément de sanglage (9) comprend une face de sanglage (13) qui est agencée pour coopérer avec un intérieur (B) des sangles de ceinture des extrémités de ceinture.

8. Lit de bébé d'avion selon l'une quelconque des revendications précédentes, dans lequel le dispositif de réception de ceinture (8) comprend au moins une saillie de ceinture (140) qui est agencée pour, pendant l'usage, retenir la ceinture d'avion (G) sanglée qui coopère avec l'élément de sanglage (9) à l'intérieur du dispositif de réception de ceinture (8).

9. Lit de bébé d'avion selon au moins les revendications 7 et 8, dans lequel la face de sanglage (13) et la au moins une saillie de ceinture (14) définissent ensemble un élément de crochet (91) de l'élément de sanglage (9), dans lequel l'élément de sanglage (9) comprend au moins deux de ces éléments de crochet (91) qui sont espacés l'un de l'autre afin de définir une section d'un chemin de ceinture (P) entre eux,
dans lequel de préférence les au moins deux éléments de crochet (91) sont espacés d'une extrémité (15) du lit de bébé (1), laquelle extrémité (15) est configurée pour coopérer avec un dossier du siège d'avion (S).

10. Lit de bébé d'avion selon l'une quelconque des revendications précédentes, dans lequel le côté supérieur (6), au moins une section de ce dernier, et la face inférieure (3), au moins une section de cette dernière, comprennent mutuellement un angle (α), le cadre de lit (2), comprenant en particulier un mécanisme d'inclinaison pour régler l'angle (α) mutuellement inclus,
dans lequel de préférence l'angle (α) mutuellement inclus, par exemple au moins dans un état du mécanisme d'inclinaison, est un angle dans la plage de 0 à 20 degrés, encore de préférence dans la plage de 0 à 15 degrés, encore de préférence dans la plage de 4 à 10 degrés, encore de préférence dans la plage de 5 à 9 degrés, encore de préférence dans la plage de 6 à 8 degrés, de manière préférée entre toutes d'environ 7 degrés.

11. Lit de bébé d'avion selon l'une quelconque des revendications précédentes, dans lequel le cadre de lit (2) est prévu avec un support auxiliaire (15) qui s'étend entre le côté supérieur (6) et la face inférieure (3) et qui est agencé pour coopérer avec au moins un dossier du siège d'avion (S).

12. Lit de bébé d'avion selon l'une quelconque des revendications précédentes, dans lequel la surface de saillie (5) est réglable par rapport à la surface de support (4), en particulier dans lequel la surface de saillie (5) peut pivoter autour d'un axe de rotation (17) qui s'étend transversalement par rapport à une direction longitudinale (16) du cadre de lit (2) allongé et/ou peut coulisser par rapport à la surface de support (4) le long d'une direction longitudinale (16) du cadre de lit (2) allongé.

13. Lit de bébé d'avion selon l'une quelconque des revendications précédentes, dans lequel la surface de saillie (5), au moins une partie de cette dernière, fait partie du cadre de lit (2), dans lequel, en particulier le cadre de lit (2) peut s'articuler au niveau d'une interface entre la surface de support (4) et la surface de saillie (5).

14. Lit de bébé d'avion selon l'une quelconque des revendications précédentes, comprenant un harnais de sécurité, en particulier un harnais trois points ou plus, plus particulièrement un harnais cinq points qui est fixé, au moins sélectivement fixé, au cadre de lit et qui est agencé pour attacher un jeune enfant au cadre de lit.

15. Lit de bébé d'avion selon l'une quelconque des revendications précédentes, dans lequel le cadre de lit et/ou un matelas pour le cadre de lit est (sont) sensiblement en forme de coin.

16. Lit de bébé d'avion selon l'une quelconque des revendications précédentes, comprenant un pied (28) qui est extensible à partir du cadre de lit (2), en particulier à partir de la surface de saillie (5), ledit pied (28), lorsqu'il est étendu, étant configuré pour supporter le cadre de lit (2).

17. Lit de bébé d'avion selon l'une quelconque des revendications précédentes, dans lequel le cadre de lit (2) est ou forme au moins une partie d'un bagage, en particulier dans lequel le cadre de lit est monté, de manière amovible, sur le bagage et/ou prévu avec une poignée (31) pour la mise en prise par un utilisateur.
